# EUROPÄISCHE PATENTSCHRIFT

(11) **EP 2 336 259 B1**
(45) Veröffentlichungstag und Bekanntmachung des Hinweises auf die Patenterteilung: **17.01.2018**
(21) Anmeldenummer: 10194932.9
(22) Anmeldetag: 14.12.2010
(51) Int. Cl.: C09G 3/00, A63C 5/056, C10M 105/12, C10M 105/18

(54) **Verwendung von Fettethern als Gleitmittel für Sportgeräte**
Use of fat ethers as lubricants for sport devices
Utilisation d'éthers gras comme moyen de glissement pour appareils de sport

(30) Priorität: 16.12.2009 DE 102009054802
(43) Veröffentlichungstag der Anmeldung: 22.06.2011
(73) Patentinhaber: Holmenkol GmbH, 71634 Ludwigsburg (DE)
(72) Erfinder: Schütz, Markus, 70565, Stuttgart (DE); Bender, Holger, 71254, Ditzingen (DE); Falk, Stephan, 70178, Stuttgart (DE); Scharf, Cindy, 73667, Kaisersbach (DE)
(74) Vertreter: Busse & Busse

(56) Entgegenhaltungen:
- EP-A1- 1 254 983
- DE-A1- 4 139 765
- US-A- 5 914 298
- US-A1- 2006 171 613

## Beschreibung

Die vorliegende Erfindung bezieht sich auf die Verwendung von speziellen Fettethern als Gleitmittel für Sportgeräte und insbesondere Wintersportgeräte sowie Zusammensetzungen, die solche Fettether neben einer weiteren Gleiteigenschaften vermittelnden Komponente enthalten. Die vorliegende Erfindung bezieht sich auch auf ein Verfahren zur Beschichtung von Gleitflächen von Sportgeräten mit solchen Gleitmitteln.

Nicht nur im Profisport, sondern auch bei ambitionierten Amateuren gibt es ein beständiges Bedürfnis nach Gleitmitteln, die die Gleiteffekte von Sportgeräten, wie beispielsweise Ski, noch verbessern können, indem sie die Gleitreibung verringern und so beispielsweise zu noch höheren Spitzengeschwindigkeiten und einer noch besseren Beschleunigung führen. Bei besseren Gleiteigenschaften sind außerdem Sportgeräte wie Ski leichter zu kontrollieren.

Um eine möglichst hohe Gleitfähigkeit zu erreichen, werden die Gleitflächen mit Verbindungen oder Zusammensetzungen behandelt, die die Reibung mit dem jeweils angrenzenden Medium, wie z.B. Luft, Wasser und/oder Schnee/Eis vermindern können.

Im Falle von Wintersportgeräten werden wegen ihrer hydrophoben Eigenschaften gewöhnlich Skiwachse eingesetzt. Ein Skiwachs ist ein Wachs oder wachsartiges Gemisch, das auf die Lauffläche von Skiern, Langlaufskiern, Snowboards, Skibobs und dergleichen aufgebracht wird. Beim Gleiten über eine Schneeoberfläche entsteht durch die Reibung und den Druck auf die Gleitfläche Wärme, die zur Bildung eines Wasserfilms führt. Das auf das Wintersportgerät aufgebrachte Wachs verhindert, dass der Belag benetzt wird. Das Wintersportgerät kann auf dem gebildeten dünnen Wasserfilm gleiten, wodurch die Reibung minimiert wird, was wiederum zu hohen Geschwindigkeiten führt.

Es wurden im Stand der Technik bereits eine Vielzahl von Verbindungen offenbart, die die Gleiteigenschaften von Sportgeräten und insbesondere Wintersportgeräten, wie Langlaufski, Alpinski und Snowboards, verbessern. Es handelt sich dabei im Allgemeinen um Paraffinwachse und fluorierte Wachse oder fluorierte Polymere, die auch im Gemisch verwendet werden und außerdem Zusatzstoffe enthalten können.

Beispielsweise offenbart die Druckschrift EP 1 068 274 Gleitmittel für Skier, die das Octadecan gegebenenfalls im Gemisch mit einem weiteren längerkettigen Alkan enthalten. Die Druckschrift CH 660 018 gibt z.B. an, dass die Gleiteigenschaften von Skiern verbessert werden können, indem in ein Skiwachs auf der Basis von Paraffinwachs ein die Wärmeleitfähigkeit erhöhender Zusatzstoff wie Graphit oder Ruß eingearbeitet wird.

In jüngerer Vergangenheit wurden für die Verbesserung der Gleitfähigkeit vermehrt Fluorverbindungen eingesetzt. Es ist bekannt, dass fluorierte Gruppen stark hydrophob sind, sodass durch den Einsatz solcher Verbindungen als Bestandteil von Gleitmitteln die Reibung zwischen Schneeoberfläche und Skibelag weiter vermindert werden kann.

In der internationalen Patentanmeldung WO 97/27004 wird beispielsweise die Verwendung von nichtfunktionalen Perfluorpolyethern für die Verbesserung der Gleiteigenschaften von Skiern beschrieben, die bei Raumtemperatur flüssig sind. In der Patentanmeldung EP 0 444 752 werden ebenfalls Zusammensetzungen beschrieben, die die Gleiteigenschaften von Skiern verbessern sollen. Diese Zusammensetzungen enthalten organische Verbindungen, die aus einem Kohlenwasserstoffblock und einem perfluorierten Kohlenwasserstoffblock bestehen, wobei die beiden Blöcke chemisch miteinander verbunden sind. Diese aus zwei Segmenten bestehenden Verbindungen sind mit herkömmlichen Skiwachsen wie Paraffinwachsen kompatibel, so dass sie ohne weitere Kompatibilisierungsmittel mit solchen herkömmlichen Wachsen vermischt werden können. Die Patentanmeldung DE 103 17 198 offenbart Gleitmittel für Ski, bei denen es sich ebenfalls um teilfluorierte Verbindungen handelt, die aus einem Kohlenwasserstoffblock und einem perfluorierten Kohlenwasserstoffblock bestehen, wobei dieses aus zwei Segmenten bestehende Kopplungsprodukt Sauerstoffatome in Form von Etherbindungen enthalten kann.

Allerdings sind Kohlenstoff-Fluor-Bindungen sehr stark, sodass diese Verbindungen in Bezug auf die Umwelt problematisch sein können, da sie nur schwer abbaubar sind und sich in der Natur anreichern können.

Der vorliegenden Erfindung liegt die Aufgabe zugrunde, die Gleiteigenschaften von Sportgeräten und Wintersportgeräten noch weiter zu verbessern und den geschilderten Nachteilen abzuhelfen.

Diese Aufgabe wird gemäß den unabhängigen Ansprüchen gelöst.

Ein erster Aspekt der Erfindung bezieht sich auf die Verwendung mindestens eines Fettalkoholalkylethers der folgenden Formel (I) zur Verbesserung der Gleiteigenschaften von Sportgeräten:

R₁-O-R₂ (I)

in der Formel:
R₁ bedeutet eine geradkettige oder verzweigte, gesättigte oder ungesättigte Alkylgruppe mit 6 bis 30 Kohlenstoffatomen und
R₂ bedeuteteine geradkettige oder verzweigte, gesättigte oder ungesättigte Alkylgruppe mit 6 bis 30 Kohlenstoffatomen

Die Verbindungen der Formel (I) können in Kombination mit mindestens einem Fettalkohol der Formel (II): HO-R₃ verwendet werden, wobei R₃ eine geradkettige oder verzweigte, gesättigte oder ungesättigte Alkylgruppe mit 12 bis 32 Kohlenstoffatomen ist.

Gemäß einer Ausführungsform handelt es sich bei den Fettalkoholen um Verbindungen, bei denen die Gruppe R₃ unter den geradkettigen oder verzweigten, gesättigten oder ungesättigten Alkylgruppen mit 20 bis 32 Kohlenstoffatomen ausgewählt ist.

Von den Fettalkoholen kommen beispielsweise die folgenden Verbindungen und deren Gemische in Betracht: Laurylalkohol, Stearylalkohol, Oleylalkohol, Linoleylalkohol, Linolenylalkohol, Behenylalkohol, Tetracosan-1-ol (Licnocerylalkohol), Hexacosan-1-ol (Cerylalkohol), Triacontan-1-ol (Melissylalkohol). Die Patentanmeldung US 5 914 298 A offenbart die Verwendung der solchen Fettalkoholen zum Beschichten eine Gleitfläche eines Skis, eines Snowboards oder eines Schlittens. Nach einer bevorzugten Ausführungsform handelt es sich um Fettalkoholalkylether, bei denen in der Formel (I) die Gruppen R₁ und R₂ jeweils unabhängig voneinander insbesondere unter den Gruppen Hexyl, Octyl, Decyl, Lauryl, Myristyl, Cetyl, Stearyl, Oleyl, Linoleyl, Linolenyl und Behenyl ausgewählt sind.

Als Beispiele für besonders bevorzugte oben beschriebene Fettalkoholalkylether der Formel (I) können die folgenden Verbindungen und deren Gemische angegeben werden: Di-hexylether, Hexyloctylether, Hexyldecylether, Hexyllaurylether, Hexylmyristylether, Hexylcetylether, Hexylstearylether, Hexylbehenylether, Di-octylether, Octyldecylether, Octyllaurylether, Octylmyristylether, Octylcetylether, Octylstearylether, Octylbehenylether, Di-decylether, Di-laurylether, Di-myristylether, Laurylmyristylether, Di-cetylether, Di-stearylether und Di-behenylether.

Gemäß der Erfindung werden besonders bevorzugt Fettalkoholalkylether der Formel (I) verwendet, bei denen die Gruppen R₁ und R₂ geradkettig vorliegen und/oder identisch sind.

Von diesen bevorzugten Fettalkoholalkylethern können Di-hexylether, Di-octylether, Di-decylether, Di-laurylether, Di-myristylether, Di-cetylether, Di-stearylether und Di-behenylether angegeben werden.

Die Verbindungen der Formel (I) können selbstverständlich einzeln oder als Gemisch mehrerer Verbindungen der Formel (I) oder im Gemisch mit mindestens einem Fettalkohol der Formel (II) verwendet werden, insbesondere um die gewünschten physikalischen Eigenschaften des verwendeten Gemisches wunschgemäß beeinflussen zu können.

Besonders günstig ist es, Verbindungen der Formel (I) mit deutlich unterschiedlichen Schmelzpunkten einzusetzen, wie beispielsweise eine flüssige Verbindung der Formel (I) in Kombination mit einer wachsartigen und/oder festen Verbindung der Formel (I).

Nach einer vorteilhaften Ausführungsform der Erfindung werden mindestens zwei der oben definierten Verbindungen der Formel (I) im Gemisch miteinander verwendet, wobei besonders bevorzugt ein Gemisch aus mindestens zwei Fettalkoholalkylethern der Formel (I) oder ein Gemisch aus einem Fettalkoholalkylether und einem Fettalkohol verwendet wird. Durch die Verwendung eines Gemisches aus zwei unterschiedlichen Verbindungen der Formel (I) ist es insbesondere möglich, die für das Gleitmittel gewünschten Eigenschaften, wie beispielsweise die Konsistenz und somit die Konfektionierungsform wunschgemäß anpassen zu können. Soll beispielsweise ein Block zum Aufreiben auf die zu behandelnde Gleitfläche gebildet werden, werden in dem Gleitmittel bevorzugt langkettige Verbindungen, d. h. Verbindungen mit einem Schmelzpunkt von beispielsweise über etwa 50 °C, in einem überwiegenden Anteil eingesetzt. Sollen jedoch weichere Stifte oder Fluide gebildet werden, ist es günstig, Verbindungen unterschiedlicher physikalischer Eigenschaften miteinander zu vermischen, um zu der gewünschten Konfektionierungsform zu gelangen.

Die wie oben beschriebenen Verbindungen der Formel (I) haben den Vorteil, dass sie universell einsetzbar sind. Sowohl die bei Raumtemperatur flüssigen Verbindungen als auch die festen Wachse können in reiner Form auf die Oberfläche des jeweiligen Sportgeräts aufgebracht werden, ohne dass ein Erwärmen erforderlich ist. Sie können beispielsweise gegebenenfalls mit einer Bürste oder einem Schwamm direkt auf die Oberfläche aufgebracht werden.

Die Fettalkoholalkylether der Formel (I) können jedoch beispielsweise auch mit Hilfe eines Aerosolbehälters oder Pumpflakons als Aerosol aufgesprüht werden. Falls es sich um zähflüssige oder eher wachsartige Verbindungen handelt, können sie gegebenenfalls im Gemisch mit flüssigen oder fluiden Verbindungen der Formel (I) oder Viskositätsmodifizierern, wie Lösungsmitteln, vermischt werden und gegebenenfalls auch im Gemisch mit weiteren flüssigen, die Gleiteigenschaften modifizierenden Verbindungen verwendet werden.
Unter einem Viskositätsmodifizierer sind Stoffe und insbesondere Lösemittel zu verstehen, deren Funktion darin besteht, die Viskosität der fertigen Gleitmittel bedarfsgemäß einzustellen. Es können beispielsweise die organischen Lösemittel angegeben werden und darunter insbesondere die niederen Alkanole mit 1 bis 4 Kohlenstoffatomen, wie Ethanol und Isopropanol, Glycerin, Glycole und Glycolether, wie 2-Butoxyethanol, Propylenglycol, Dipropylenglycol, Hexylenglycol, Propylenglycolmonomethylether, Diethylenglycolmonoethylether und Diethylenglycolmonomethylether.
Besonders bevorzugt werden Alkohole wie Ethanol und Isopropanol und besonders bevorzugt aus Biomasse gewonnenes Ethanol (Bioalkohol) verwendet. Geignet sind beispielsweise auch flüssige Isoparaffine (ISOPARs) und Silicone wie lineare oder cyclische Polydimethylsiloxane.

Die Fettalkohole der Formel (II) sind bekannte Produkte, die im Handel bezogen werden können. Die Fettalkoholalkylether der Formel (I) sind ebenfalls im Handel erhältlich oder können nach der Williamson-Ether-Synthese in bekannter Weise aus den entsprechenden Alkalialkoholaten und Alkylhaloim Handel erhältlich oder können nach der Williamson-Ether-Synthese in bekannter Weise aus den entsprechenden Alkalialkoholaten und Alkylhalogeniden hergestellt werden, die unter nukleophiler Substitution miteinander reagieren. Durch diese Synthese können unsymmetrische Ether leicht gebildet werden.

Ein weiterer Aspekt der Erfindung bezieht sich auf eine Gleitmittelzusammensetzung für Sportgeräte, die mindestens eine wie oben definierte Verbindung der Formel (I) in Kombination mit einem oder mehreren ergänzenden Gleitwachsen enthält.
Unter den Begriff Gleitwachs sind gemäß der vorliegenden Erfindung alle Wachse oder wachsähnlichen Verbindungen einzeln oder in Form von geeignet gebildeten Gemischen zu verstehen, die die Gleiteigenschaften von Sportgeräten verbessern können.

Als Beispiele können alle Wachse, Harze, Fette und hydrierten Öle angegeben werden, die in den Skiwachsen des Standes der Technik gewöhnlich eingesetzt werden.
Zu nennen sind insbesondere die natürlichen tierischen Wachse, pflanzlichen Wachse und Mineralwachse, die chemisch modifizierten Wachse und die synthetischen Wachse.
Sie sind insbesondere natürlicher Herkunft, wie Bienenwachs, Wollwachs, Carnaubawachs, Candelillawachs, Ouricurywachs, Japanwachs, Korkfaserwachs, Zuckerrohrwachs, Baumwollwachs, Reiswachs, Montanwachs, Paraffinwachs, Lignitwachs oder mikrokristalline Wachse, Ceresin oder Ozokerit, hydrierte Öle, wie Jojobaöl. Es kommen auch synthetische Wachse, beispielsweise bei der Polymerisation oder Copolymerisation von Ethylen gebildete Polymere und deren Gemische, durch Fischer-Tropsch-Synthese hergestellte Wachse oder Fettsäureester, wie Octacosanylstearat, bei 40° C oder besser 45° C feste Glyceride, Siliconwachse, beispielsweise Alkyl- oder Alkoxydimethicone mit Alkyl- oder Alkoxykette mit 10 bis 45 Kohlenstoffatomen, Ester von bei 40° C festem Poly(di)methylsiloxan, dessen Esterkette mindestens 10 Kohlenstoffatome aufweist; und deren Gemische in Betracht.

Besonders bevorzugt werden aufgrund ihrer besseren Umweltverträglichkeit im Gemisch mit den oben angegebenen Verbindungen der Formel (I) natürliche Gleitmittelkomponenten eingesetzt, wobei von diesen die natürlichen Wachse besonders bevorzugt werden. Nach einer vorteilhaften Ausführungsform ist das ergänzende Gleitmittel unter den Mikrowachsen, Ceresin, Bienenwachs und Carnaubawachs ausgewählt.

Gemäß der Erfindung kann es sich bei dem ergänzenden Gleitwachs auch um eine weitere oder mehrere weitere Verbindungen der Formel (I) handeln, d.h. in der Gleitmittelzusammensetzung sind zumindest zwei Verbindungen der Formel (I) enthalten, oder um einen oder mehrere Fettalkohole der Formel (II).

Ein weiterer Aspekt der Erfindung ist ein Verfahren zur Beschichtung eines Sportgeräts, umfassend die Schritte des Aufbringens mindestens einer wie oben definierten Verbindung der Formel (I) oder mindestens eine solche Verbindung der Formel (I) enthaltende Zusammensetzung auf die Gleitfläche eines Sportgeräts und gegebenenfalls eine thermische und/oder mechanische Nachbehandlung der gebildeten Beschichtung.

Die wie oben definierten Verbindungen der Formel (I) können die Gleiteigenschaften von verschiedenartigsten Sportgeräten verbessern. Als Beispiele sind insbesondere Wintersportgeräte zu nennen, wie beispielsweise Ski, Langlaufski, Snowboards, Schlitten und Skibobs.
Die Verbindungen der Formel (I) oder deren Gemische können jedoch auch die Gleiteigenschaften von Booten, Surfboards, Wasserski, Segelflugzeugen, Gleitschirmen oder Ultraleichtflugzeugen verbessern.
Sie können zum Beispiel bei Beschichtungen für Boote in die zur Beschichtung verwendete Lackmatrix eingebracht werden.

Die Verbindungen der Formel (I) oder deren Gemische können als solche auf die zu behandelnde Gleitfläche, wie beispielsweise auf den nicht vorbehandelten Belag eines Wintersportgeräts aufgebracht werden. Es ist jedoch auch möglich, die Verbindungen der Formel (I) oder ihre Gemische auf eine vorbehandelte Gleitfläche aufzutragen, wie beispielsweise auf einen mit einem Gleitwachs vorbehandelten Belag eines Wintersportgeräts. Sie können vorteilhaft auch im Gemisch mit einem oder mehreren Gleitwachsen und/oder einem Viskositätsmodifizierer, wie sie oben definiert wurden, auf die zu behandelnde Gleitfläche aufgebracht werden.

Besonders bevorzugt handelt es sich bei der zu behandelnden Gleitfläche um die Lauffläche eines Wintersportgeräts und insbesondere um eine Skilauffläche.
Der Mengenanteil der Verbindung(en) der Formel (I) in der fertigen Gleitmittelzusammensetzung hängt von der gewünschten Produktform, wie beispielsweise Riegeln, Stiften, Pasten, Pulvern, Fluiden oder Sprays, ab und kann in weiten Bereichen schwanken. Die Verbindungen der Formel (I) sind in den erfindungsgemäßen Gleitmittelzusammensetzungen fester und halbfester Konsistenz vorzugsweise in einem Mengenanteil von mindestens 70 Gew.-% und besonders bevorzugt in einem Mengenanteil von 75 bis 95 Gew.-%, bezogen auf das Gesamtgewicht des Gleitmittels, enthalten.
Im Falle von niedrigviskosen Gleitmittelzusammensetzung wie Fluiden oder Produkten, die versprüht werden sollen und z.B. als Aerosol oder in einem Pumpflakon konfektioniert sind, liegt der Mengenanteil der Verbindung(en) der Formel (I) vorzugsweise im Bereich von 0,5 bis 20 Gew.-% und noch bevorzugter 1 bis 10 Gew.-%, bezogen auf das Gesamtgewicht der Gleitmittelzusammensetzung,

Nach einer weiteren Ausführungsform werden die Verbindungen der Formel (I) oder deren Gemische als einzige die Gleiteigenschaften verbessernden Stoffe eingesetzt, die Gleitmittelzusammensetzungen enthalten demnach gemäß dieser Ausführungsform ausschließlich zwei oder mehr Verbindungen der Formel (I).

Die Gleitmittelzusammensetzungen können natürlich je nach Bedarf und Einsatzzweck weitere, für herkömmliche Gleitmittel übliche Zusatzstoffe enthalten. Es können beispielsweise Farbstoffe, Pigmente, Füllstoffe, Stabilisatoren, UV-Filter, Antioxidantien, Netzmittel, Spreitmittel, Verlaufsmittel, Entschäumer, Silicone und dergleichen enthalten.

Weitere Merkmale der Erfindung ergeben sich aus der folgenden Beschreibung von Ausführungsbeispielen in Verbindung mit den Ansprüchen. Die einzelnen Merkmale können bei einer Ausführungsform gemäß der Erfindung je für sich oder zu mehreren verwirklicht sein.

### Beispiel 1

Die folgenden Gleitmittelzusammensetzungen wurden hergestellt, indem die enthaltenen Bestandteile unter Homogenisieren geschmolzen und anschließend auf Raumtemperatur abgekühlt wurden.

### Zusammensetzung 1

50 % Di-Stearylether
50 % Di-Octylether

### Zusammensetzung 2

80 % Di-Stearylether
20 % Di-Octylether

### Zusammensetzung 3

70 % Di-Stearylether
20 % Di-Octylether
10 % Vaseline

### Zusammensetzung 4

30 % Di-Cetylether
60 % Di-Laurylether
10 % Bienenwachs

### Zusammensetzung 5

25 % Di-Cetylether
50 % Di-Laurylether
25 % Di-Stearylether

### Zusammensetzung 6

5 % Di-Cetylether
85 % Bioalkohol
10 % Propylenglycolmonomethylether

### Beispiel 2

Dieses Beispiel zeigt die Verbesserung der Gleiteigenschaften, die mit einem Gleitmittel gemäß der vorliegenden Erfindung im Vergleich mit Gleitmitteln des Standes der Technik erzielt werden kann.

Identische Ski wurden mit einer erfindungsgemäßen Gleitmittelzusammensetzung (1) in Stiftform und zwei als Vergleich dienenden Zusammensetzungen (2) und (3) des Standes der Technik ohne weitere Vorbehandlung auf die Lauffläche der Ski mit Hilfe eines Korkblocks aufgetragen. Pro Skipaar wurden jeweils vier Testfahrten vom selben Skifahrer unter den folgenden Bedingungen durchgeführt:

| | |
|---|---|
| Wetter: | sonnig |
| Lufttemperatur: | 4 °C |
| Schneetemperatur: | -3 °C |
| Luftfeuchtigkeit: | 46 % |
| Schneeart: | Altschnee - fein |

Die erfindungsgemäße Gleitmittelzusammensetzung (1) besteht aus 10 % Bienenwachs, 40 % Di-Laurylether und 50 % Di-Cetylether. Die Zusammensetzung (2) ist das im Handel erhältliche Skiwachs Wax Paste XXL in Pastenform der Firma Holmenkol auf der Basis von Paraffinwachs. Bei der Zusammensetzung (3) handelt es sich um das Produkt Wonderglide der Firma Holmenkol, das als Fluid vorliegt und ein Gemisch aus mehreren Wachskomponenten darstellt.

Das Ergebnis ist in der folgenden Tabelle zusammengefasst, wobei aus den ermittelten Werten jeweils der Mittelwert gebildet wurde:

| | Mittelwert (s) |
|---|---|
| Gleitmittel (1) | 10,24 |
| Wax Paste XXL | 10,33 |
| Wonderglide | 10,43 |

Die mit der Testmischung (1) gewachsten Ski waren um ca. 10 bzw. 20 hundertstel Sekunden schneller.

## Patentansprüche

1. Verwendung mindestens eines Fettalkoholalkylethers der folgenden Formel (I) zur Verbesserung der Gleiteigenschaften von Sportgeräten:
R₁-O-R₂ (I)
in der Formel:
R₁ bedeutet oder eine geradkettige oder verzweigte, gesättigte oder ungesättigte Alkylgruppe mit 6 bis 30 Kohlenstoffatomen und vorzugsweise 6 bis 22 Kohlenstoffatomen und
R₂ bedeuteteine geradkettige oder verzweigte, gesättigte oder ungesättigte Alkylgruppe mit 6 bis 30 Kohlenstoffatomen und vorzugsweise 6 bis 22 Kohlenstoffatomen.

2. Verwendung nach Anspruch 1, wobei die Gruppen R₁ und R₂, die gleich oder verschieden sind, unter den folgenden Alkylgruppen ausgewählt sind: Hexyl, Octyl, Decyl, Lauryl, Myristyl, Cetyl, Stearyl, Oleyl, Linoleyl, Linolenyl und Behenyl.

3. Verwendung nach Anspruch 1 oder 2, wobei die Gruppen R₁ und R₂ geradkettig vorliegen und identisch sind.

4. Verwendung nach einem der vorhergehenden Ansprüche, wobei die Verbindung der Formel (I) unter den folgenden Verbindungen ausgewählt ist: Di-hexylether, Hexyllaurylether, Hexylmyristylether, Di-octylether, Hexyloctylether, Octyllaurylether, Octylmyristylether,Di-decylether, Octylstearylether, Di-laurylether, Di-myristylether, Laurylmyristylether, Di-cetylether, Di-stearylether und Di-behenylether.

5. Verwendung nach einem der vorhergehenden Ansprüche, wobei ein Gemisch aus mindestens zwei Verbindungen der Formel (I) und insbesondere ein Gemisch aus mindestens zwei Fettalkoholalkylethern der Formel (I) oder ein Gemisch aus einem Fettalkoholalkylether und einem Fettalkohol der Formel HO-R₃ verwendet wird, wobei R₃ eine geradkettige oder verzweigte, gesättigte oder ungesättigte Alkylgruppe mit 12 bis 32 Kohlenstoffatomen ist.

6. Verwendung nach einem der vorhergehenden Ansprüche, wobei es sich bei den Sportgeräten um Wintersportgeräte, wie Ski, Langlaufski, Snowboards, Skibobs und Schlitten, handelt.

7. Verwendung nach einem der vorhergehenden Ansprüche, wobei die zumindest eine Verbindung der Formel (I), wie sie in einem der Ansprüche 1 bis 5 definiert ist, als solche auf den nicht vorbehandelten Belag eines Wintersportgerätes oder einen mit einem Gleitwachs vorbehandelten Belag eines Wintersportgeräts oder im Gemisch mit mindestens einem ergänzenden Gleitwachs auf den Belag eines Wintersportgeräts aufgebracht wird.

8. Gleitmittelzusammensetzung für Sportgeräte, das mindestens eine Verbindung der Formel (I), wie sie in einem der Ansprüche 1 bis 5 definiert ist, in Kombination mit einem oder mehreren ergänzenden Gleitwachsen enthält, ausgewählt aus Bienenwachs, Wollwachs, Carnaubawachs, Candelillawachs, Ouricurywachs, Japanwachs, Korkfaserwachs, Zuckerrohrwachs, Baumwollwachs, Reiswachs, Montanwachs, Paraffinwachs, Lignitwachs oder mikrokristalline Wachse, Ceresin oder Ozokerit, hydrierte Öle, bei der Polymerisation oder Copolymerisation von Ethylen gebildeten Polymeren und deren Gemischen, durch Fischer-Tropsch-Synthese hergestellte Wachse oder Fettsäureester, bei 45°C feste Glyceride, Siliconwachse, Ester von bei 40°C festem Poly(di)methylsiloxan, dessen Esterkette mindestens 10 Kohlenstoffatome aufweisen und deren Gemische.

9. Gleitmittelzusammensetzung nach Anspruch 8, **dadurch gekennzeichnet, dass** die Verbindung(en) der Formel (I), wie sie in einem der Ansprüche 1 bis 5 definiert ist (sind), mindestens 70 Gew.-% und vorzugsweise 75 bis 95 Gew.-%, bezogen auf das Gesamtgewicht der Zusammensetzung, ausmachen.

10. Verfahren zur Beschichtung eines Sportgeräts, das die folgenden Schritte umfasst:
I. Auftragen mindestens einer Verbindung der Formel (I), wie sie in einem der Ansprüche 1 bis 5 definiert ist, oder einer Gleitmittelzusammensetzung, wie sie in einem der Ansprüche 8 oder 9 definiert ist, wird auf die Gleitfläche eines Sportgeräts und insbesondere eines Wintersportgeräts, und
II. anschließend gegebenenfalls thermisches und/oder mechanisches Nachbehandeln der in Schritt (I) gebildeten Beschichtung.

## Claims

1. Use of at least one fatty alcohol alkyl ether of the following formula (I) for improving the gliding properties of sports equipment:
R₁-O-R₂ (I)
in which formula:
R₁ represents a straight-chain or branched, saturated or unsaturated alkyl group having 6 to 30 carbon atoms, and preferably 6 to 22 carbon atoms, and
R₂ represents a straight-chain or branched, saturated or unsaturated alkyl group having from 6 to 30 carbon atoms, and preferably 6 to 22 carbon atoms.

2. Use according to claim 1, wherein the groups R₁ and R₂, which are the same or different, are selected from the following alkyl groups: hexyl, octyl, decyl, lauryl, myristyl, cetyl, stearyl, oleyl, linoleyl, linolenyl and behenyl.

3. Use according to either claim 1 or claim 2, wherein the groups R₁ and R₂ are straight-chain and are identical.

4. Use according to any of the preceding claims, wherein the compound of formula (I) is selected from the following compounds: dihexyl ether, hexyl lauryl ether, hexyl myristyl ether, dioctyl ether, hexyl octyl ether, octyl lauryl ether, octyl myristyl ether, didecyl ether, octyl stearyl ether, dilauryl ether, dimyristyl ether, lauryl myristyl ether, dicetyl ether, distearyl ether and dibehenyl ether.

5. Use according to any of the preceding claims, wherein a mixture of at least two compounds of formula (I), and in particular a mixture of at least two fatty alcohol alkyl ethers of formula (I) or a mixture of a fatty alcohol alkyl ether and a fatty alcohol of formula HO-R₃ is used, wherein R₃ is a straight-chain or branched, saturated or unsaturated alkyl group having 12 to 32 carbon atoms.

6. Use according to any of the preceding claims, wherein the sports equipment is winter sports equipment such as skis, cross-country skis, snowboards, skibobs and toboggans.

7. Use according to any of the preceding claims, wherein the at least one compound of formula (I), as defined in any of claims 1 to 5, is applied as such to the non-pretreated surface of an item of winter sports equipment or a surface of an item of winter sports equipment that has been pretreated using a glide wax, or is applied to the surface of an item of winter sports equipment in a mixture with at least one additional glide wax.

8. Gliding agent composition for sports equipment that contains at least one compound of formula (I), as defined in any of claims 1 to 5, in combination with one or more additional glide waxes selected from beeswax, wool wax, carnauba wax, candelilla wax, ouricury wax, Japan wax, cork fibre wax, sugarcane wax, cotton wax, rice wax, montan wax, paraffin wax, lignite wax or microcrystalline waxes, ceresin or ozokerite, hydrogenated oils, polymers formed during polymerisation or co-polymerisation of ethylene and the mixtures thereof, waxes or fatty acid esters produced by means of Fischer-Tropsch Synthesis, glycerides that are solid at 45°C, silicone waxes, esters of poly(di)methylsiloxane that are solid at 40°C, the ester chains of which have at least 10 carbon atoms, and mixtures thereof.

9. Gliding agent composition according to claim 8, **characterised in that** the compound(s) of formula (I), as defined in any of claims 1 to 5, make up at least 70 wt.%, and preferably from 75 to 95 wt.%, based on the total weight of the composition.

10. Method for coating an item of sports equipment, comprising the following steps:
I. applying at least one compound of formula (I), as defined in any of claims 1 to 5, or a gliding agent composition, as defined in either claim 8 or claim 9, to the gliding surface of an item of sports equipment, and in particular an item of winter sports equipment, and
II. subsequently, optionally thermally and/or mechanically further treating the coating formed in step (I).

## Revendications

1. Utilisation d'au moins un alkyléther d'alcool gras de la formule (I) suivante pour améliorer les propriétés de glisse d'équipements de sport :
R₁-O-R₂ (I)
formule dans laquelle :
R₁ désigne un groupe alkyle saturé ou insaturé, linéaire ou ramifié, ayant de 6 à 30 atomes de carbone et de préférence de 6 à 22 atomes de carbone et
R₂ désigne un groupe alkyle saturé ou insaturé, linéaire ou ramifié, ayant de 6 à 30 atomes de carbone et de préférence de 6 à 22 atomes de carbone.

2. Utilisation selon la revendication 1, dans laquelle les groupes R₁ et R₂, qui sont identiques ou différents, sont choisis parmi les groupes alkyle suivants : hexyle, octyle, décyle, lauryle, myristyle, cétyle, stéaryle, oléyle, linoléyle, linolényle et béhényle.

3. Utilisation selon la revendication 1 ou 2, dans laquelle les groupes R₁ et R₂ sont linéaires et identiques.

4. Utilisation selon l'une des revendications précédentes, dans laquelle le composé de la formule (I) est choisi parmi les composés suivants : le dihexyléther, l'hexyllauryléther, l'hexylmyristyléther, le dioctyléhter, l'hexyloctyléther, l'octyllauryléther, l'octylmyristyléther, le didécyléther, l'octylstéarylether, le dilauryléther, le dimyristyléther, le laurylmyristyléther, le dicétyléther, le distéaryléther et le diphényléther.

5. Utilisation selon l'une des revendications précédentes, dans laquelle on utilise un mélange d'au moins deux composés de la formule (I) et en particulier un mélange d'au moins deux alkyléthers d'alcool gras de la formule (I) ou un mélange d'un alkyléther d'alcool gras et d'un alcool gras de la formule HO-R₃, R₃ étant un groupe alkyle saturé ou insaturé, linéaire ou ramifié, ayant de 12 à 32 atomes de carbone.

6. Utilisation selon l'une des revendications précédentes, dans laquelle les équipements de sport sont des équipements de sports d'hiver, tels que des skis, des skis de fond, des planches à neige, des ski-bobs et des luges.

7. Utilisation selon l'une des revendications précédentes, dans laquelle l'au moins un composé de la formule (I), tel que défini selon l'une des revendications 1 à 5, est appliqué tel quel sur le revêtement non prétraité d'un équipement de sports d'hiver ou un revêtement, prétraité avec une cire de glissement, d'un équipement de sports d'hiver ou en mélange avec au moins une cire de glissement supplémentaire sur le revêtement d'un équipement de sports d'hiver.

8. Composition lubrifiante, destinée à des équipements de sport, qui contient au moins un composé de la formule (I), tel que défini selon l'une des revendications 1 à 5, en combinaison avec une ou plusieurs cires de glissement supplémentaires choisies parmi la cire d'abeille, la cire de laine, la cire de carnauba, la cire de candelilla, la cire d'Ouricury, la cire du Japon, la cire de fibres de liège, la cire de canne à sucre, la cire de coton, la cire de riz, la cire de montan, la cire de paraffine, la cire de lignite ou les cires microcristallines, la cérésine ou l'ozokérite, les huiles hydrogénées, des polymères formés lors de la polymérisation ou la copolymérisation d'éthylène et leurs mélanges, des cires ou esters d'acide gras produits par synthèse de Fischer-Tropsch, des glycérides solides à 45 °C, des cires de silicone, des esters de poly(di)méthylsiloxane solides à 40 °C dont la chaîne ester comporte au moins 10 atomes de carbone et leurs mélanges.

9. Composition lubrifiante selon la revendication 8, **caractérisée en ce que** le ou les composés de la formule (1), tels que définis selon l'une quelconque des revendications 1 à 5, constituent au moins 70 % en poids, et de préférence de 75 à 95 % en poids, du poids total de la composition.

10. Procédé de revêtement d'un équipement de sport qui comprend les étapes suivantes visant à :
I. appliquer au moins un composé de la formule (I) tel que défini selon l'une des revendications 1 à 5, ou une composition lubrifiante, telle que définie selon l'une des revendications 8 ou 9, sur la surface de glissement d'un équipement de sport, et en particulier un équipement de sports d'hiver, et
II. puis éventuellement soumettre le revêtement formé à l'étape (I) à un post-traitement thermique et/ou mécanique.
